# EUROPÄISCHE PATENTSCHRIFT

(11) **EP 3 074 296 B1**
(45) Veröffentlichungstag und Bekanntmachung des Hinweises auf die Patenterteilung: **04.04.2018**
(21) Anmeldenummer: 14786684.2
(22) Anmeldetag: 22.10.2014
(51) Int. Cl.: B62D 21/11, B60G 11/08

(54) **HILFSRAHMEN MIT INTEGRIERTER QUERBLATTFEDER**
SUBFRAME WITH BUILT-IN TRANSVERSE LEAF SPRINGS
CHÂSSIS AUXILIAIRE À RESSORT À LAMES TRANSVERSAL INTÉGRÉ

(30) Priorität: 25.11.2013 DE 102013223976
(43) Veröffentlichungstag der Anmeldung: 05.10.2016
(73) Patentinhaber: ZF Friedrichshafen AG, 88046 Friedrichshafen (DE)
(72) Erfinder: SEGLER, Daniel, 88048 Friedrichshafen (DE); WOLF, Daniel, 88048 Friedrichshafen (DE); MÜLLER, Ingolf, 88069 Tettnang (DE)
(86) Internationale Anmeldenummer: PCT/EP2014/072594
(87) Internationale Veröffentlichungsnummer: WO 2015/074819

(56) Entgegenhaltungen:
- EP-A1- 2 522 533
- WO-A1-87/01339
- DE-A1- 3 243 434
- DE-A1-102004 006 459
- DE-A1-102010 042 222
- DE-A1-102011 077 336
- DE-A1-102011 083 173
- DE-T3- 69 522 950
- US-A- 4 893 832
- US-A1- 2012 315 433

## Beschreibung

Die Erfindung betrifft eine Vorrichtung zur Radaufhängung nach dem Oberbegriff von Anspruch 1.

Aus der Druckschrift DE 695 22 950 T3 ist eine Tragstruktur bekannt, die zur Radaufhängung, d.h. zur Anbindung von Rädern an eine Fahrzeugkarosserie verwendet werden kann. Diese Tragstruktur bildet einen Hilfsrahmen. Sie besteht aus einem Fasertrerbundwerkstoff, wobei es möglich ist, die Steifigkeit lokal zu variieren. Zur Aufnahme von Bewegungen eines Radträgers ist ein separates Bauteil mit Federwirkung vorgesehen. Allerdings muss dieses Bauteil in aufwendiger Weise mit der Tragstruktur verbunden werden.

Aus der Druckschrift DE 10 2011 077 336 A1 ist ein Radaufhängungselement für ein Kraftfahrzeug bekannt, das einstückig aus einem Faserverbundwerkstoff ausgebildet ist. Das Radaufhängungselement umfasst eine Tragstruktur und Querlenker zur Führung von Radträgern. Die Lenker können zudem als Federelement ausgebildet sein. Um die Funktion eines Querstabilisators zu realisieren, ist allerdings ein separates Bauteil erforderlich. Dies verursacht zusätzliche Kosten und erhöht den Montageaufwand. Darüber hinaus vergrößert sich durch den Querstabilisator das Fahrzeuggewicht.

Aus der Druckschrift DE 10 2011 083 173 A1, die den Oberbegriff des Anspruchs 1 offenbart, ist eine weitere Vorrichtung zur Radaufhängung bekannt. Diese umfasst zwei als Querblattfeder fungierende Lenker 3 zur Führung von Radträgern, zwei Karosserieträger 4 und zwei Verbindungsstrukturbauteile 2a, 2b. Während die Verbindungsstrukturbauteile aus einem isotropen oder quasi-isotropen Werkstoff, insbesondere aus Metall aufgebaut sind, sind die Querblattfedern und die Karosserieträger jeweils aus faserverstärktem Kunststoff-Verbund ausgebildet.

Wie in Fig. 1 von DE 10 2011 083 173 A1 dargestellt und dem dortigen Patentanspruch 1 zu entnehmen, sind die Verbindungsstrukturbauteile, die Querblattfedern und die Karosserieträger jeweils als separate Elemente ausgeführt, die zu einer an ein Fahrzeug montierbaren Tragstruktur zusammengebaut sind. Dazu weisen die beiden Verbindungsstrukturbauteile jeweils Aufnahmen auf, in die die Querblattfedern und die Karosserieträger einlegbar und formschlüssig, kraftschlüssig und/oder stoffschlüssig damit verbindbar sind. Aufgrund der hohen Anzahl von Einzelteilen besteht ein hoher Montageaufwand bei der Herstellung der Vorrichtung. Zudem wirken sich die zahlreichen Verbindungsstellen nachteilig auf Lebensdauer und akustische Eigenschaften aus.

Der vorliegenden Erfindung liegt die Aufgabe zugrunde, die Räder eines Fahrzeuges unter Umgehung der den aus dem Stand der Technik bekannten Lösungen innewohnenden Nachteile an der Karosserie anzubinden.

Eine erfindungsgemäße Vorrichtung zur Radaufhängung, d.h. eine Vorrichtung, die als Bestandteil einer Radaufhängung geeignet ist, umfasst mindestens einen Hilfsrahmen.

Mit Radaufhängung wird hier die Anbindung von Rädern eines Fahrzeuges an die Fahrzeugkarosserie bezeichnet. Die Anbindung erfolgt unter Erfüllung von Funktionen wie Federung, Dämpfung, Spurhaltung, Querstabilisierung und Fixierung an der Fahrzeugkarosserie.

Mit Hilfsrahmen bezeichnet man allgemein ein Bauteil der Radaufhängung - in der Regel um eine starre Tragstruktur, das an der Fahrzeugkarosserie fixiert werden kann und dazu dient, bewegliche Teile der Radaufhängung aufzunehmen.

Der zur erfindungsgemäßen Vorrichtung gehörige Hilfsrahmen kann an mindestens zwei Befestigungsstellen an einer Fahrzeugkarosserie, vorzugsweise an zwei zu der Fahrzeugkarosserie gehörigen Längsträgern fixiert werden. Vorzugsweise erfolgt die Fixierung durch Verschrauben des Hilfsrahmens mit der Fahrzeugkarosserie. Elastische Elemente, wie beispielsweise Gummipuffer, die an den genannten zwei Befestigungsstellen zwischen dem Hilfsrahmen und der Fahrzeugkarosserie angebracht werden können, dienen dazu, die Fahrzeugkarosserie gegenüber dem Hilfsrahmen von Stößen und Schwingungen zu entkoppeln, die durch die Räder in das Fahrwerk eingeleitet werden.

Weiterhin weist der zu der erfindungsgemäßen Vorrichtung gehörige Hilfsrahmen mindestens eine Querblattfeder auf.

Unter Querblattfeder ist ein in Querrichtung, d.h. orthogonal zur Fahrtrichtung horizontal angeordneter Biegebalken verstanden. Der Biegebalken ist also gegenüber einer in Fahrtrichtung verlaufenden vertikal ausgerichteten Ebene spiegelsymmetrisch. Ein Biegebalken ist allgemein so ausgestaltet, dass er sich steif gegenüber einer Biegung in eine erste Richtung und nachgiebig gegenüber einer Biegung in eine orthogonal zu der ersten Richtung verlaufende zweite Richtung verhält. Um die Funktionen der Radaufhängung erfüllen zu können, ist der Biegebalken, bzw. die Querblattfeder vorzugsweise so angeordnet, dass die zweite Richtung zumindest teilweise senkrecht, d.h. nicht waagerecht bzw. orthogonal zur Waagerechten, verläuft. Die zweite Richtung ist also gegenüber der Waagerechten um einen von Null verschiedenen Winkel verkippt. Vorzugsweise verläuft die zweite Richtung genau senkrecht. Weiterhin bevorzugt ist, dass sowohl die erste Richtung als auch die zweite Richtung in einer in Fahrtrichtung verlaufenden senkrechten Ebene liegen.

Die beschriebene Ausrichtung der Querblattfeder ermöglicht die Federung mindestens zweier gegenüberliegender, d.h. auf gegenüberliegenden Fahrzeugseiten angeordneter Räder. Um Unebenheiten der Straße ausgleichen zu können, werden insbesondere Bewegungen der Räder mit mindestens einer in Vertikalrichtung verlaufenden Richtungskomponente, die größer als Null ist, gefedert. Die Räder sind insbesondere in Querrichtung gegenüberliegend angeordnet. Dabei befindet sich mindestens ein Rad auf der linken Fahrzeugseite und mindestens ein Rad auf der rechten Fahrzeugseite.

Der Hilfsrahmen und die Querblattfeder sind erfindungsgemäß an genau zwei Verbindungsstellen miteinander verbunden. Durch die genau zwei Verbindungsstellen erreicht man, dass die Querblattfeder die Funktion eines Querstabilisators erfüllt. Die zwei Verbindungsstellen untergliedern die Querblattfedern in drei Segmente: Zwei Achsschenkel und ein Verbindungsstück. Die Achsschenkel befinden sich jeweils an den äußeren Enden der Querblattfeder und sind entsprechend an gegenüberliegenden Fahrzeugseiten angeordnet. Zwischen den zwei Achsschenkenkeln verläuft das Verbindungsstück. Dort, wo das Verbindungsstück in die Achsschenkel übergeht, liegen sogenannte Verbindungsstellen. Die Verbindungsstellen trennen also das Verbindungsstück von den Achsschenkeln.

Federn die Räder gleichseitig ein, wird die Querblattfeder spiegelbildlich, entlang einer senkrecht in Fahrtrichtung durch die Fahrzeugmitte verlaufenden Ebene verformt. Dabei üben die Achsschenkel in den Verbindungsstellen ein Drehmoment gleicher Richtung und gleichem Betrags auf das Verbindungsstück aus.

Beim wechselseitigen Federn bewegt sich ein Achsschenkel nach oben, der andere Achsschenkel nach unten. In den Verbindungsstellen wirken dadurch entgegengesetzt gerichtete Drehmomente auf das Verbindungsstück. Dadurch kommt es zu einer s-förmigen Verbiegung des Verbindungsstücks. Infolgedessen ist der Widerstand, den die Querblattfeder wechselseitigem Federn entgegensetzt größer als der Widerstand, den die Querblattfeder entsprechenden gleichseitigen Federn entgegensetzt.

Um die Stabilisatorfunktion der Querblattfeder zu unterstützen, sollte die Drehsteifigkeit der Vorrichtung in den zwei Verbindungsstellen bezüglich einer Verdrehung der Querblattfeder um eine Drehachse in Längs- bzw. Fahrtrichtung möglichst gering sein. Dies erfolgt vorzugsweise durch Ausdünnen und/oder Schwächen des Materials im Bereich der Verbindungsstellen. Bei einer Ausführung der erfindungsgemäßen Vorrichtung in Faserkunststoffbauweise kann etwa eine solche Schwächung durch Einlegen von Tefloneinlagen erzielt werden.

Erfindungsgemäß sind der Hilfsrahmen und die Querblattfeder weiterhin an den zwei Verbindungsstellen einstückig miteinander verbunden. Bei einer einstückigen Verbindung des Hilfsrahmens und der Querblattfeder, umfasst die erfindungsgemäße Vorrichtung eine einstückige Komponente, die aus dem Hilfsrahmen und der Querblattfeder besteht. Insbesondere die oben erwähnte Faserkunststoffbauweise hat sich als geeignet erwiesen, den Hilfsrahmen und die Querblattfeder einstückig auszuführen.

In einer bevorzugten Ausführungsform der Erfindung ist die Querblattfeder radführend, d.h. zur Führung der Räder mindestens teilweise, vorzugsweise ausschließlich in Querrichtung, d.h. in eine Richtung, die gegenüber einer in Fahrtrichtung um einen von Null verschiedenen Winkel verkippt ist, ausgebildet. Die Querblattfeder übernimmt also die Funktion eines Querlenkers. Zu diesem Zweck wird die Querblattfeder so mit den Radträgern der oben genannten Räder gekoppelt, dass die Querblattfeder von den Radträgern eingeleitete Kräfte in Querrichtung mindestens teilweise, vorzugsweise vollständig aufnehmen kann. Bevorzugt ist die Querblattfeder daher so mit den Radträgern gekoppelt, dass die Radträger gegenüber der Querblattfeder mindestens einen, bevorzugt genau einen, rotatorischen Freiheitsgrad, und höchstens einen, bevorzugt keinen, translatorischen Freiheitsgrad aufweisen. Entsprechend eignen sich zur Lagerung der Radträger in der Querblattfeder beispielsweise herkömmliche Gummi-Metall-Buchsen.

In einer weiteren bevorzugten Ausführungsform weist die Vorrichtung genau zwei Querblattfeder der oben beschriebenen Art auf. Die zwei Querblattfeder weisen vorzugsweise separate Enden auf, d.h. die Enden der Querblattfeder sind voneinander getrennt. In diesem Fall sind die Querblattfedern ausschließlich über den Hilfsrahmen und gegebenenfalls über die Radträger miteinander verbunden.

Alternativ können die zwei Querblattfedern gemeinsame Enden aufweisen, d.h. die Enden der Querblattfeder sind miteinander verbunden. Die Achsschenkel der zwei Querblattfeder bilden dann zwei Dreiecksquerlenker.

Die zwei Querblattfeder sind hintereinander, d.h. in Fahrtrichtung versetzt zueinander angeordnet. Um unter den Gesichtspunkten der Fahrdynamik eine besonders vorteilhafte Führung der Räder zu erreichen, hat es sich darüber hinaus als günstig erwiesen, die Querblattfeder auch in vertikaler Richtung versetzt zueinander anzuordnen. Eine Querblattfeder ist also in Bezug zu der Fahrzeugkarosserie höher angeordnet als die andere. Hierdurch erhält die Vorrichtung eine dreidimensionale Struktur.

Eine solche Struktur lässt sich in einer bevorzugten Ausführungsform der Erfindung durch genau zwei Hilfsrahmen der oben beschriebenen Art realisieren, die jeweils genau eine Querblattfeder der oben beschriebenen Art aufweisen. Die Verbindungsstellen der zwei Hilfsrahmen sind so ausgebildet, dass jeweils eine Verbindungsstelle des einen Hilfsrahmens mit einer Verbindungsstelle des anderen Hilfsrahmens in Deckung gebracht werden kann. Die in Deckung gebrachten Verbindungsstellen können dann an der Fahrzeugkarosserie fixiert werden, d.h. zwei in Deckung gebracht Verbindungsstellen bilden jeweils eine der Verbindungsstellen, mit denen die Vorrichtung an der Fahrzeugkarosserie fixiert werden kann. Insbesondere ist also die Vorrichtung mindestens zweistückig, vorzugsweise genau zweistückig, ausgeführt. Die zwei Stücke, aus denen die Vorrichtung besteht, werden dabei jeweils durch einen der Hilfsrahmen mit der Querblattfeder gebildet.

Alternativ ist es möglich, genau einen Hilfsrahmen zu verwenden in den die zwei Querblattfeder zweistückig integriert sind. Darüber hinaus kann der Hilfsrahmen aber beliebig viele Querblattfeder aufweisen, insbesondere genau eine Querblattfeder oder mehr als zwei Mehrblattfedern.

Einer weiteren bevorzugten Ausführungsform der Erfindung liegt das Prinzip zugrunde, die Stabilisatorfunktion nicht nur durch die s-förmige Verbiegung der Querblattfeder in dem Verbindungsstück zu realisieren, sondern zusätzlich durch eine Torsion der Querblattfeder, d.h. eine Verdrehung der Querblattfeder in Querrichtung bzw. um eine quer zur Fahrtrichtung verlaufende Torsionsachse.

Ein entsprechendes Torsionsmoment, das bei wechselseitigem Federn auf die Querblattfeder wirkt, kann durch mindestens einen um mindestens eine Drehachse verschwenkbar in der Fahrzeugkarosserie gelagerten Längslenker aufgebracht werden. Vorzugsweise kommt pro Rad mindestens ein Längslenker, pro Achse also mindestens zwei Längslenker, zum Einsatz. Die Drehachse verläuft vorzugsweise in Querrichtung, wenigstens aber teilweise in Querrichtung, d.h. nicht orthogonal zur Querrichtung, insbesondere nicht in Längs- bzw. Fahrtrichtung.

Der Längslenker ist so mit dem Radträger verbunden, dass eine Verschwenkung des Längslenkers um die Drehachse mit einer Drehung des Radträgers mindestens teilweise um die Querachse einhergeht. Die Drehung des Radträgers verläuft also nicht orthogonal zur Querachse, insbesondere nicht in Fahrtrichtung. Somit gibt es eine Richtungskomponente der Drehung des Radträgers in Querrichtung, die größer als Null ist.

Diese Richtungskomponente sorgt für eine Torsion der Querblattfeder. Der Radträger ist dazu so mit der Querblattfeder verbunden, dass die Drehung des Radträgers mindestens teilweise um die Querachse mit der Torsion der Querblattfeder einhergeht. Vor diesem Hintergrund erfolgt die Drehung des Längslenkers vorzugsweise ausschließlich um eine Querachse. Die oben bereits erwähnte Gummistahlbuchse zur Anbindung des Radträgers an die Querblattfeder ist auch geeignet, um ein Torsionsmoment von dem Radträger auf die Querblattfeder zu übertragen.

Um die Torsion der Querblattfeder zu ermöglichen, sind der Hilfsrahmen und/oder die Verbindungsstellen vorzugsweise gegenüber der Torsion der Querblattfeder nachgiebig ausgestaltet. Die Vorrichtung weist dazu in den zwei Verbindungsstellen eine verminderte Drehsteifigkeit bezüglich einer Verdrehung der Querblattfeder um eine Drehachse in Querrichtung auf. Dies erfolgt vorzugsweise durch Ausdünnen und/oder Schwächen des Materials im Bereich der Verbindungsstellen. Bei einer Ausführung der erfindungsgemäßen Vorrichtung in Faserkunststoffbauweise kann etwa eine solche Schwächung durch Einlegen von Tefloneinlagen erzielt werden.

Durch die Verbindung des Radträgers mit dem Längslenker vollführt der Radträger beim Einfedern eine Bewegung entlang eines Kreises um die Drehachse des Radträgers. Diese Bewegung darf der Hilfsrahmen nicht behindern. Der Hilfsrahmen muss also gegenüber einer kreisförmigen Bewegung des Radträgers um die Drehachse des Längslenkers nachgiebig ausgestaltet sein. Um das zu erreichen, ist der Hilfsrahmen in einer bevorzugten Ausführungsform in genau zwei Befestigungsstellen an der Fahrzeugkarosserie fixiert. Dabei ist der Hilfsrahmen gegenüber einer Verschwenkung, vorzugsweise gegenüber einer gegensinnigen Verschwenkung, der Verbindungsstellen von Hilfsrahmen und Querblattfeder um eine durch die Befestigungsstellen verlaufende Achse nachgiebig ausgestaltet. Vorzugsweise verläuft die Achse in Querrichtung, wobei auch die Befestigungsstellen in Querrichtung nebeneinander angeordnet sind.

Die beschriebene Form der Nachgiebigkeit des Hilfsrahmens ist nicht ausschließlich. So kann es erforderlich sein, dass der Hilfsrahmen zur Adaption des Längslenkers auf weitere Art nachgiebig ausgestaltet ist. Insbesondere gegenüber einer Verschiebung der Querblattfeder in Richtung der Befestigungsstellen bzw. einer Rotation der Querblattfeder um die Drehachse des Längslenkers kann der Hilfsrahmen nachgiebig ausgestaltet sein.

Um die beschriebene Nachgiebigkeit des Hilfsrahmens zu ermöglichen, weist der Hilfsrahmen gemäß einer weiteren bevorzugten Ausführungsform Träger auf, die jeweils zwischen einer der Befestigungsstellen und einer der Verbindungsstellen verlaufen. Vorzugsweise weist die Vorrichtung genau vier Träger mit genau zwei Querblattfedern auf. Die Querblattfeder sind jeweils in zwei Verbindungsstellen mit einem der Träger verbunden. Weiterhin verläuft zwischen jeder der Befestigungsstellen und zwei der vier Verbindungsstellen jeweils ein Träger. In jeder Befestigungsstelle treffen also zwei Träger aufeinander. Insbesondere verläuft zwischen jeder Befestigungsstelle und jeder Querblattfeder einer der Träger.

Die Träger sind jeweils nachgiebig gegenüber einer Verbiegung bzw. einem Biegemoment um die durch die Verbindungsstellen verlaufende Achse, vorzugsweise um eine Querachse, ausgestaltet. Hingegen ist eine steife Ausgestaltung der Träger gegenüber einer Belastung in Querrichtung vorteilhaft. Dies ermöglicht die oben beschriebene Führung der Räder in Querrichtung durch die Querblattfeder.

Einzelne Ausführungsbeispiele der Erfindung werden im Folgenden anhand der Figuren erläutert. Dabei weisen gleiche Bezugszeichen auf gleiche oder funktionsgleiche Merkmale hin.

Im Einzelnen zeigt
- Fig. 1: einen Hilfsrahmen mit genau einer Querblattfeder;
- Fig. 2: eine zweistückig aufgebaute Vorrichtung zur Radaufhängung;
- Fig. 3: dieselbe Vorrichtung in einer Seitenansicht;
- Fig. 4: eine Vorrichtung mit verschwenkbarem Hilfsrahmen; und
- Fig. 5: dieselbe Vorrichtung mit einem Längslenker.

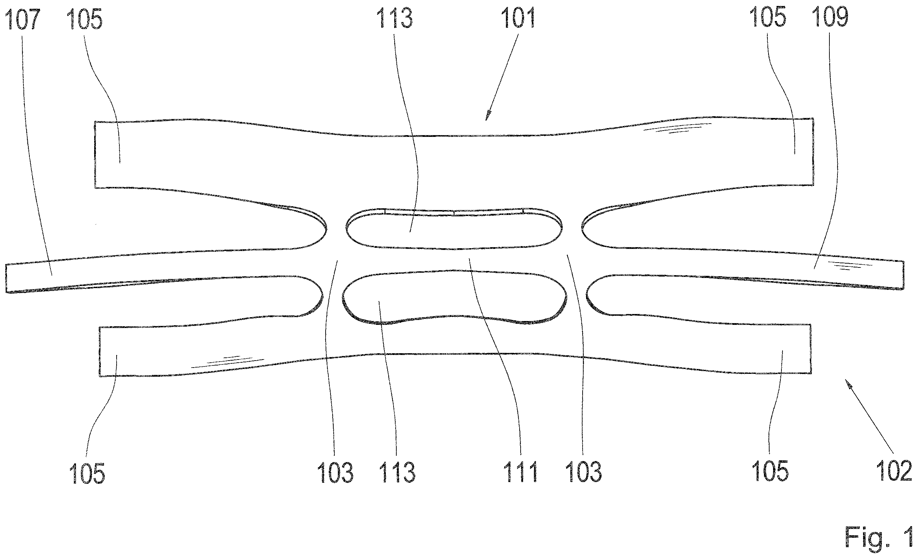

In Fig. 1 ist ein Hilfsrahmen 101 mit genau einer Querblattfeder 102 dargestellt. Der Hilfsrahmen 101 und die Querblattfeder 102 sind in zwei Verbindungsstellen 103 einstückig miteinander verbunden. In vier Befestigungsstellen 105 kann der Hilfsrahmen 101 an einer Fahrzeugkarosserie fixiert werden.

Die Querblattfeder 102 besteht aus drei Teilen: Ein linker Achsschenkel 107, ein rechter Achsschenkel 109 und ein Verbindungsstück 111. Der linke Achsschenkel 107 und der rechte Achsschenkel 109 gehen an jeweils einer Verbindungsstelle 103 in das Verbindungsstück 111 über. Aussparungen 113 verlaufen an beiden Seiten des Verbindungsstücks 111 zwischen dem Verbindungsstück 111 und dem Hilfsrahmen 101. Die Aussparungen 113 ermöglichen eine Verbiegung des Verbindungsstücks 111 gegenüber dem Hilfsrahmen 101 und damit einhergehend eine Verdrehung von Teilen der Querblattfeder 102 gegenüber dem Hilfsrahmen 101 in den Verbindungspunkten 103.

Bei gleichseitigem Einfedern ergibt sich eine bogenförmige Verbiegung der Querblattfeder 102, insbesondere des Verbindungsstücks 111. Wechselseitiges Einfedern hingegen führt dazu, dass sich die Querblattfeder 102 in dem Verbindungsstück 111 s-förmig verformt. Folglich setzt die Querblattfeder 109 wechselseitigem Einfedern einen größeren Widerstand entgegen als gleichseitigem Einfedern. Die Querblattfeder 102 fungiert damit als Querstabilisator.

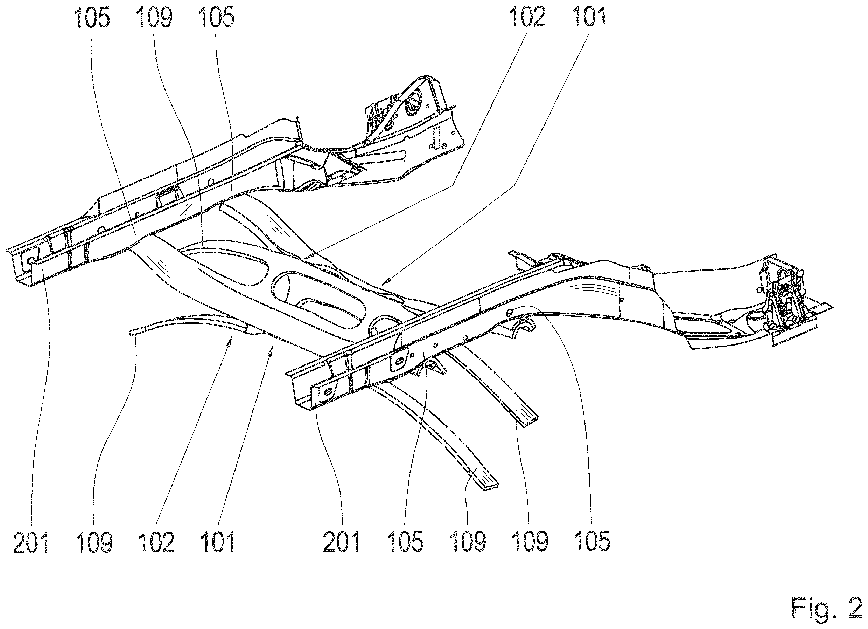

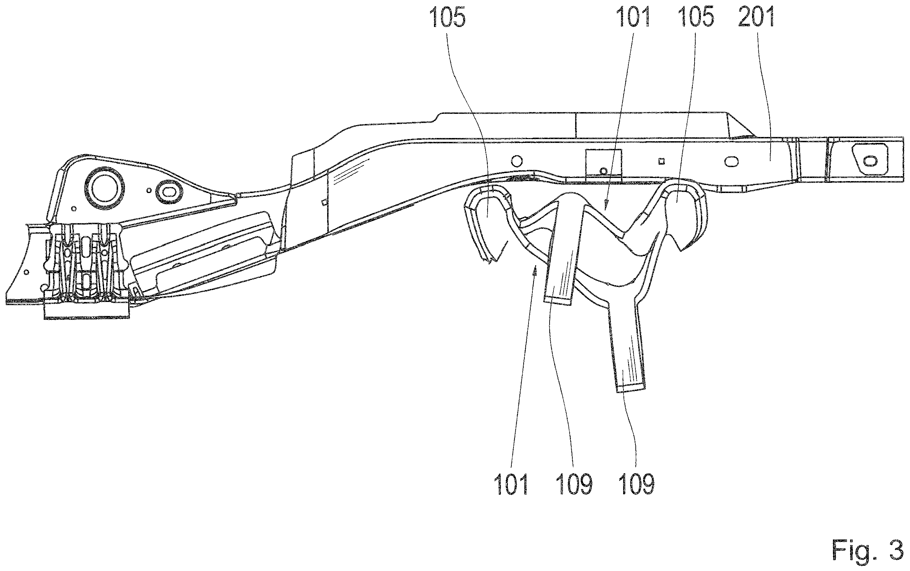

Die Figuren 2 und 3 veranschaulichen, wie zwei Hilfsrahmen 101 mit jeweils genau einer Querblattfeder 102 in einer Vorrichtung zur Radaufhängung zusammenwirken. Die zwei Hilfsrahmen 101 sind so übereinander angeordnet, dass sich ihre jeweils vier Befestigungsstellen 105 in vertikaler Richtung überdecken. Somit können jeweils zwei Befestigungsstellen 105 gemeinsam an einem von zwei Längsträgern 201 einer Fahrzeugkarosserie befestigt werden. Die Längsträger 201 nehmen jeweils an zwei Stellen jeweils zwei übereinanderliegende Befestigungsstellen 105 der Hilfsrahmen 101 auf.

Die zwei Querblattfeder 102 bilden insgesamt vier Achsschenkel 109 - auf jeder Fahrzeugseite zwei. Dabei dienen die jeweils zwei auf einer Fahrzeugseite befindlichen Achsschenkel 109 der Führung von genau einem Radträger. Ein Radträger wird also von zwei Achsschenkeln 109 bzw. zwei Querblattfedern 102 geführt.

Die Anordnung aus Fig. 2 ist in Fig. 3 in einer Seitenansicht dargestellt. Diese Darstellung veranschaulicht, wie die Hilfsrahmen 101 übereinander angeordnet werden können. Der Längsträger 201 nimmt insgesamt vier Befestigungsstellen 105 auf, die in zwei Paaren mit jeweils einer oben liegenden Befestigungsstelle 105 eines oben liegenden Hilfsrahmens 101 und einer unten liegende Befestigungsstelle 105 eines unten liegenden Hilfsrahmens 101 angeordnet sind.

Die beiden Hilfsrahmen 101 sind in vertikaler Richtung so ausgeformt, dass sich die Achsschenkel 109 sowie die in Fig. 3 nicht zu sehenden Verbindungsstücke 111 frei bewegen können. Aus diesem Grund sind der obere und der untere Hilfsrahmen 101 im Bereich zwischen den Befestigungsstellen 105 vertikal beabstandet. Insbesondere sind die Querblattfedern 102 mit den Achsschenkeln 109 vertikal versetzt zueinander angeordnet. Die eine Querblattfeder 102 verläuft oberhalb der anderen. Weiterhin sind die Querblattfedern 102 mit den Achsschenkeln 109 auch in horizontaler Richtung versetzt zueinander angeordnet. Dies bedeutet, dass sich eine der Querblattfedern 102 in Fahrtrichtung vor der anderen befindet.

Insgesamt ist also die eine Querblattfeder 102 nach schräg oben versetzt gegenüber der anderen angeordnet. Keinen Versatz hingegen weisen die Querblattfedern 102 zu den Seiten hin, d. h. quer zur Fahrtrichtung, auf.

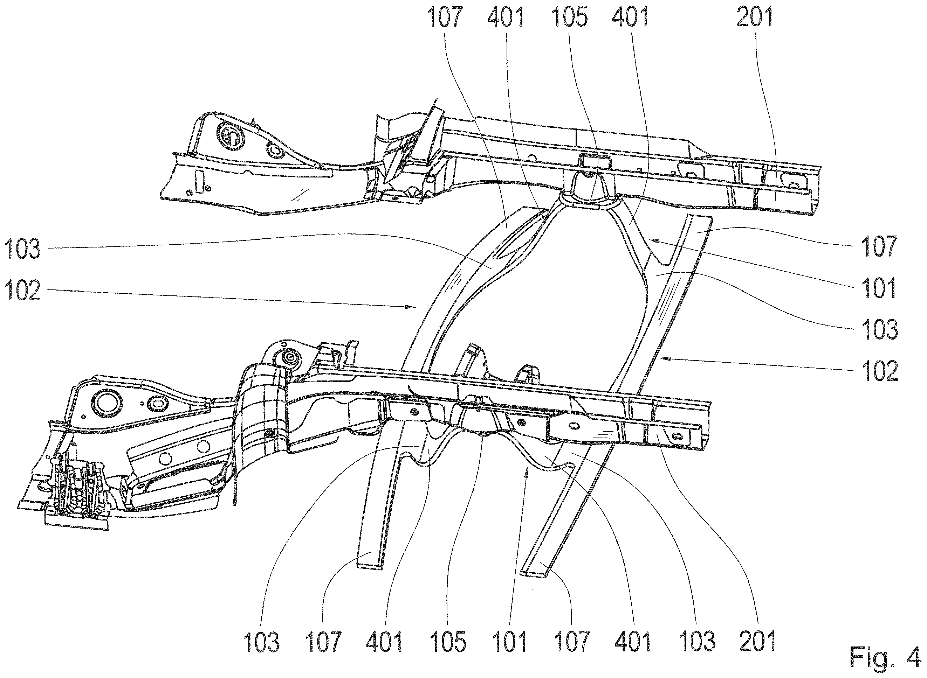

Fig. 4 zeigt ein alternatives Ausführungsbeispiel, bei dem die Vorrichtung in genau zwei Befestigungsstellen 105 mit den Längsträgern 201 verbunden ist. Den Hilfsrahmen 101 bilden vier Träger 401. Die Vorrichtung umfasst genau zwei Querblattfedern 102. Jede Querblattfeder 102 weist zwei Verbindungsstellen 103 auf. In jeder der Verbindungsstellen 103 zweigt jeweils ein Träger 401 ab. Der Träger verbindet die Verbindungsstelle 103 mit einer der Befestigungsstellen 105.
Die Träger 401 verlaufen also jeweils von einer Verbindungsstelle 103 zu einer Befestigungsstelle 105.

Die Träger 401 sind abgeflacht ausgeführt, d. h. ihre Höhe ist im Querschnitt um ein Vielfaches geringer als ihre Breite. Weiterhin sind die Träger 401 quer zur Fahrtrichtung breit, orthogonal dazu hingegen flach geformt. Dies ermöglicht eine Verschwenkung der Querblattfeder 102 um eine durch die Befestigungsstellen 105 in Querrichtung verlaufende Achse. Steif hingegen sind die Träger 401 in Querrichtung. Insbesondere sind die Träger 401 unnachgiebig gegenüber einer auf eine der Querblattfedern 102 in Querrichtung wirkende Last. Eine translatorische Verschiebung der Querblattfeder 102 in Querrichtung wird hierdurch verhindert. Dies ermöglicht eine Verwendung der Querblattfedern 102 als Querlenker.

Aufgrund der flachen Ausführung der Träger 401 ist es darüber hinaus möglich, die Querblattfedern 102 gegenüber den Trägern 401 zu verdrehen. Die Querblattfeder 102 kann als Ganzes oder gegensinnig verdreht werden. Eine gegensinnige Verdrehung bezeichnet dabei eine Torsion der Querblattfeder 102.

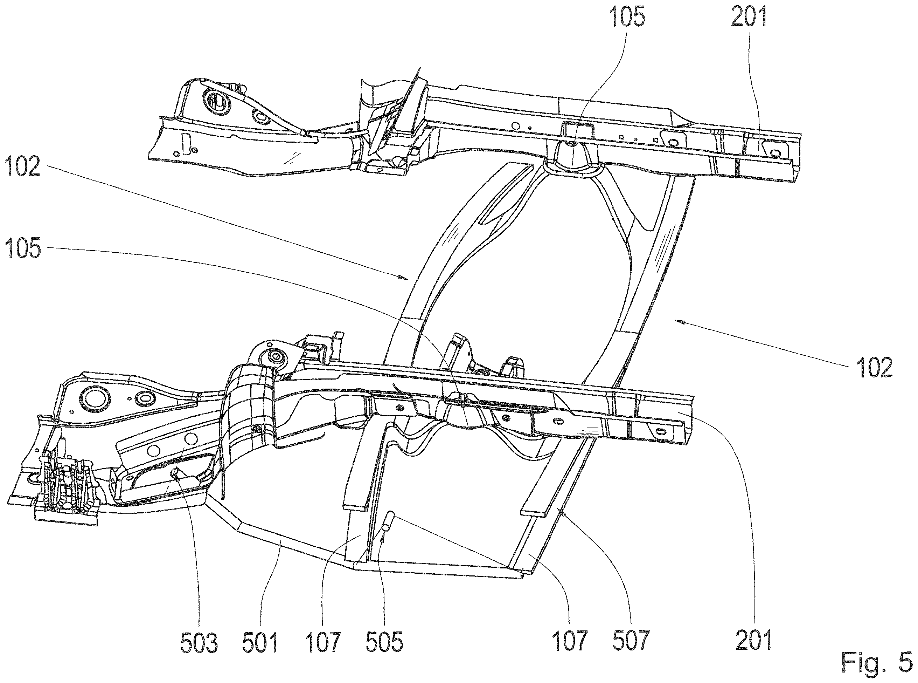

Zu einer Torsion der Querblattfeder 102 kommt es insbesondere, wenn die zwei Verbindungsstellen 103 der Querblattfeder 102 gegensinnig verschwenkt werden. Eine solche gegensinnige Verschwenkung kann mittels eines in Fig. 5 dargestellten Längslenkers 501 realisiert werden.

Der das vordere Ende des Längslenkers 501 bildet eine Drehpunkt 503. An dieser Stelle ist der Längslenker 501 in dem Längsträger 201 um eine Querachse drehbar gelagert.

Der Längslenker 501 verbindet die Achsschenkel 107. Dies kann entweder eine direkte Verbindung - wie in Fig. 5 dargestellt - sein oder eine indirekte Verbindung, bei der die Achsschenkel 107 mit dem Radträger verbunden sind und dieser wiederum mit dem Längslenker 501.

Der "freihängende" Zapfen kennzeichnet die Position einer Radachse 505. Des Weiteren sind die Federn 102 im eingefederten Zustand 507 dargestellt.

### Bezugszeichen

- 101: Hilfsrahmen
- 102: Querblattfeder
- 103: Verbindungsstelle
- 105: Befestigungsstelle
- 107: linker Achsschenkel
- 109: rechter Achsschenkel
- 111: Verbindungsstück
- 113: Aussparung
- 201: Längsträger
- 401: Träger
- 501: Längslenker
- 503: Drehpunkt
- 505: Radachse
- 507: eingefederter Zustand

## Patentansprüche

1. Vorrichtung zur Radaufhängung; mit
mindestens einem Hilfsrahmen (101), der
in mindestens in zwei Befestigungsstellen (105) an einer Fahrzeugkarosserie (201) fixiert werden kann; und mit
mindestens einer Querblattfeder (102) zur Federung mindestens zweier auf gegenüberliegenden Fahrzeugseiten angeordneter Räder; **dadurch gekennzeichnet, dass** die Vorrichtung eine einstückige, aus Hilfsrahmen (101) und Querblattfeder (102) bestehende Komponente umfasst, wobei der Hilfsrahmen (101) und die Querblattfeder (102) an genau zwei Verbindungsstellen (103) einstückig miteinander verbunden sind.

2. Vorrichtung nach Anspruch 1, **dadurch gekennzeichnet, dass** die Querblattfeder (102) zur Führung der Räder mindestens teilweise in Querrichtung ausgebildet ist.

3. Vorrichtung nach einem der vorhergehenden Ansprüche, **gekennzeichnet durch** genau zwei Querblattfeder (102).

4. Vorrichtung dem vorhergehenden Anspruch, **gekennzeichnet durch** genau zwei Hilfsrahmen (101) mit jeweils genau einer Querblattfeder (102).

5. Vorrichtung nach einem der Ansprüche 1 bis 3, **gekennzeichnet durch** genau einen Hilfsrahmen (101).

6. Vorrichtung nach einem der vorhergehenden Ansprüche, **dadurch gekennzeichnet, dass**
der Hilfsrahmen (101) und/oder die Verbindungsstellen (103) gegenüber einer Torsion der Querblattfeder (102) nachgiebig ausgestaltet sind.

7. Vorrichtung nach dem vorhergehenden Anspruch, **dadurch gekennzeichnet, dass** der Hilfsrahmen (101) in genau zwei Befestigungsstellen (105) an der Fahrzeugkarosserie fixiert werden kann, wobei
der Hilfsrahmen (101) gegenüber einer Verschwenkung der Verbindungsstellen (103) um eine durch die Befestigungsstellen (105) verlaufende Achse nachgiebig ausgestaltet ist.

8. Vorrichtung nach dem vorhergehenden Anspruch, **dadurch gekennzeichnet, dass** der Hilfsrahmen Träger (401) aufweist, die jeweils zwischen einer der Befestigungsstellen (105) und einer der Verbindungsstellen (103) verlaufen und
nachgiebig gegenüber einer Verbiegung mindestens teilweise um die durch die Befestigungsstellen (105) verlaufende Achse ausgestaltet sind.

9. Vorrichtung nach einem der Ansprüche 6 bis 8, **gekennzeichnet durch** mindestens einen um mindestens eine Drehachse verschwenkbar in der Fahrzeugkarosserie gelagerten Längslenker (501); wobei
der Längslenker (501) und die Querblattfeder (102) so mit einem Radträger verbunden sind, dass eine Verschwenkung des Längslenkers (501) um die Drehachse mit einer Drehung des Achsträgers mindestens teilweise um eine Querachse einhergeht, und dass
die Drehung des Radträgers mindestens teilweise um die Querachse mit einer Torsion der Querblattfeder (102) einhergeht.

## Claims

1. Apparatus for wheel suspension; having at least one subframe (101) which
can be fixed to a vehicle body (201) at least at two fastening points (105); and having
at least one transverse leaf spring (102) for the suspension of at least two wheels which are arranged on opposite vehicle sides; **characterized in that**
the apparatus comprises a single-piece component which consists of the subframe (101) and the transverse leaf spring (102), the subframe (101) and the transverse leaf spring (102) being connected integrally to one another at precisely two connecting points (103).

2. Apparatus according to Claim 1, **characterized in that**
the transverse leaf spring (102) is configured for controlling the wheels at least partially in the transverse direction.

3. Apparatus according to either of the preceding claims, **characterized by**
precisely two transverse leaf springs (102).

4. Apparatus according to the preceding claim, **characterized by**
precisely two subframes (101) having in each case precisely one transverse leaf spring (102).

5. Apparatus according to one of Claims 1 to 3, **characterized by**
precisely one subframe (101).

6. Apparatus according to one of the preceding claims, **characterized in that**
the subframe (101) and/or the connecting points (103) are/is of resilient configuration with respect to a torsion of the transverse leaf spring (102).

7. Apparatus according to the preceding claim, **characterized in that**
the subframe (101) can be fixed on the vehicle body at precisely two fastening points (105),
the subframe (101) being of resilient configuration with respect to pivoting of the connecting points (103) about an axis which runs through the fastening points (105).

8. Apparatus according to the preceding claim, **characterized in that**
the subframe has carriers (401) which run in each case between one of the fastening points (105) and one of the connecting points (103) and are of resilient configuration with respect to bending at least partially about the axis which runs through the fastening points (105).

9. Apparatus according to one of Claims 6 to 8, **characterized by**
at least one longitudinal link (501) which is mounted in the vehicle body such that it can be pivoted about at least one rotational axis;
the longitudinal link (501) and the transverse leaf spring (102) being connected to a wheel support in such a way that pivoting of the longitudinal link (501) about the rotational axis accompanies rotation of the axle carrier at least partially about a transverse axis, and that
the rotation of the wheel support at least partially about the transverse axis accompanies a torsion of the transverse leaf spring (102).

## Revendications

1. Dispositif de suspension de roue; avec
au moins un châssis auxiliaire (101), qui
peut être fixé dans au moins deux positions de fixation (105) à une carrosserie de véhicule (201); et avec
au moins un ressort à lames transversal (102) pour la suspension d'au moins deux roues disposées sur des côtés opposés du véhicule;
**caractérisé en ce que** le dispositif comprend un composant en une seule pièce composé du châssis auxiliaire (101) et du ressort à lames transversal (102), dans lequel le châssis auxiliaire (101) et le ressort à lames transversal (102) sont assemblés l'un à l'autre en une seule pièce exactement en deux points d'assemblage (103).

2. Dispositif selon la revendication 1, **caractérisé en ce que** le ressort à lames transversal (102) est conçu pour guider les roues au moins partiellement en direction transversale.

3. Dispositif selon l'une quelconque des revendications précédentes, **caractérisé par** exactement deux ressorts à lames transversaux (102).

4. Dispositif selon la revendication précédente, **caractérisé par** exactement deux châssis auxiliaires (101) avec chaque fois exactement un ressort à lames transversal (102).

5. Dispositif selon l'une quelconque des revendications 1 à 3, **caractérisé par** exactement un châssis auxiliaire (101).

6. Dispositif selon l'une quelconque des revendications précédentes, **caractérisé en ce que** le châssis auxiliaire (101) et/ou les points d'assemblage (103) sont réalisés de façon souple par rapport à une torsion du ressort à lames transversal (102).

7. Dispositif selon la revendication précédente, **caractérisé en ce que** le châssis auxiliaire (101) peut être fixé exactement en deux points de fixation (105) à la carrosserie de véhicule, dans lequel le châssis auxiliaire (101) est réalisé de façon souple par rapport à un pivotement des points d'assemblage (103) autour d'un axe s'étendant à travers les points de fixation (105).

8. Dispositif selon la revendication précédente, **caractérisé en ce que** le châssis auxiliaire présente des supports (401), qui s'étendent respectivement entre un des points de fixation (105) et un des points d'assemblage (103) et qui sont réalisés de façon souple par rapport à une flexion au moins partiellement autour de l'axe s'étendant à travers les points de fixation (105).

9. Dispositif selon l'une quelconque des revendications 6 à 8, **caractérisé par**
au moins un bras oscillant longitudinal (501) monté dans la carrosserie de véhicule de façon pivotante autour d'au moins un axe de rotation; dans lequel
le bras oscillant longitudinal (501) et le ressort à lames transversal (102) sont reliés à un support de roue de telle manière qu'un pivotement du bras oscillant longitudinal (501) autour de l'axe de rotation soit accompagné par une rotation du support d'essieu au moins partiellement autour d'un axe transversal, et que
la rotation du support de roue au moins partiellement autour de l'axe transversal soit accompagnée par une torsion du ressort à lames transversal (102).
